# EUROPÄISCHE PATENTSCHRIFT

(11) **EP 0 640 408 B1**
(45) Veröffentlichungstag und Bekanntmachung des Hinweises auf die Patenterteilung: **11.12.1996**
(21) Anmeldenummer: 94112625.2
(22) Anmeldetag: 12.08.1994
(51) Int. Cl.: B05D 1/28, B05D 1/18, D21H 23/38, D21H 23/52

(54) **Verfahren zum kontinuierlichen Imprägnieren**
Process for a continuous impregnation
Procédé pour l'imprégnation continue

(30) Priorität: 31.08.1993 DE 4329217
(43) Veröffentlichungstag der Anmeldung: 01.03.1995
(73) Patentinhaber: Beiersdorf Aktiengesellschaft, D-20245 Hamburg (DE)
(72) Erfinder: Jauchen, Peter, D-22455 Hamburg (DE); Knolle, Herbert, Dr., D-21465 Reinbek (DE); Külper, Klaus, Dr., D-25421 Pinneberg (DE); Wille, Romanus, Dr., D-77736 Zell a.H. (DE)

(56) Entgegenhaltungen:
- DE-B- 2 550 980
- DE-B- 2 817 062
- GB-A- 1 419 647

## Beschreibung

Die Erfindung betrifft ein Verfahren zum kontinuierlichen Imprägnieren von saugfähigen, trockenen Bahnen, insbesondere solchen aus Papier, Vlies oder Geweben, gemäß dem Oberbegriff des Anspruchs 1.

Es gibt bereits verschiedenartige solche Verfahren, die teilweise auch in der Praxis angewandt werden, etwa als Tauchimprägnierung oder Druckimprägnierung.

So beschreibt DE-A1-3.024.394 die Herstellung einer Kunststoff-Ausrüstung in einer Papiermaschine nach der Art einer Leimpressen-Imprägnierung mit einseitigem Anwischen in der Papiermaschine.

Auch die DE-A1-3.040.681 beschreibt eine Zwangsimprägnierung mittels einer Rasterwalze aus elastischem Material, das insbesondere für Papierbahnen entwickelt wurde und bei dem das Imprägniermittel in das bahnförmige Material bis zur Sättigung hineingepreßt wird (S. 12, Mitte), also nach Art einer Druckimprägnierung.

Die US-A1-4.000.343 beschreibt ein Verfahren vom Typ der Tauchimprägnierung, bei dem insbesondere Papier mit einem nicht-wäßrigen Imprägniermittel behandelt wird.

Die EP-B1-223.922 beschreibt ein Verfahren zum Imprägnieren von Papierbahnen mit Kunstharzen, wobei dem Mahlgrad des Gemisches aus Zellstoff-Fasern, dem pH-Wert des Imprägniermittels etc. besondere Bedeutung beigemessen wird, das aber im übrigen ebenfalls in der Leimpresse den Auftrag des Imprägniermittels vorsieht.

Es ist aber bereits ein Verfahren zum kontinuierlichen Imprägnieren von saugfähigen trockenen Bahnen vorgeschlagen worden, wobei das Imprägniermittel mittels Saugen in eine Rohpapierbahn befördert wird, vgl. DE-B1-2.550.980. Danach wird zunächst eine ausreichende Menge Imprägniermittel auf die Oberfläche der Papierbahn aufgetragen und dann diese Bahn über eine Saugzone geführt, in die das Imprägniermittel bis zur anderen Oberfläche durchgesaugt wird. Gesaugt wird dabei mittels Saugplatten, über denen ggf. ein Siebband mitläuft, insbesondere bei weniger naßfesten Papieren.

Diese bekannten Verfahren haben jedoch beträchtliche Nachteile, die ein wirtschaftliches und qualitativ gleichmäßiges Imprägnieren nicht gewährleisten. Denn es stellen sich beim Imprägnieren von saugfähigen trockenen Bahnen, insbesondere Papierbahnen, vielschichtige Probleme, die ein gleichmäßiges Imprägnieren erschweren, sowohl eine gleichmäßige Penetration als auch eine gleichmäßige Verteilung des Imprägniermittels im Substrat. Zudem muß bei den hohen geforderten Bahngeschwindigkeiten eine schnelle Penetration gewährleistet sein, bei gleichzeitiger Reproduzierbarkeit der Ergebnisse. Auch ein störungsfreies und verschleißarmes Verfahren ist zu fordern, das zudem einfach und bedienungsfreundlich sein soll. Speziell bei gekreppten Papierbahnen wird bei nahezu allen Verfahren die Kreppung entweder herausgezogen oder aber breitgedrückt, so daß die gewünschten Kreppfalten nach der Imprägnierung verloren gegangen sind.

Die Tauchimprägnierung kann diesen Anforderungen nur zum Teil genügen und ist speziell hinsichtlich gleichmäßiger Penetration und Verteilung und auch Penetrations-Geschwindigkeit unzureichend. Die Druckimprägnierung erzielt zwar höhere Penetrations-Geschwindigkeiten, ist aber ebenso unzureichend hinsichtlich gleichmäßiger Penetration und Verteilung und wird zudem schwierig bei empfindlicheren und weniger naßfesten Papieren. Aber auch die Saugimprägnierung, wie sie oben beschrieben wurde, hat Nachteile, die diesen Vorschlag im Bereich des theoretischen stecken ließen. Denn zwar soll ausreichend Imprägniermittel aufgetragen werden, das dann durchzusaugen ist. Aber die Praxis zeigt, daß insbesondere in den Seitenbereichen die Gefahr besteht, Luft mit anzusaugen, wie überhaupt ein ungleichmäßig imprägniertes Papier resultiert, bei einer pflegebedürftigen und im Schnellauf bedienungsaufwendigen Verfahrensführung.

Aufgabe der Erfindung war es, ein Verfahren zum kontinuierlichen Imprägnieren von saugfähigen, trockenen Bahnen, insbesondere solchen aus Papier, Vlies oder Geweben bereitzustellen, das die Nachteile des Standes der Technik vermeidet oder zumindest vermindert.

Gemäß der Erfindung wird diese Aufgabe durch das Verfahren nach Anspruch 1 gelöst. Zweckmäßige Weiterbildungen der Erfindung sind in den abhängigen Ansprüchen beschrieben.

Damit wird eine Saugimprägnierung technisch realisierbar, die eine gleichmäßige Imprägnierung ergibt und damit eine bedeutsame Qualitätsverbesserung bei gleichzeitiger Einsparung an Imprägniermittel. Auch "schwierige" Rohpapiere lassen sich danach imprägnieren, mit reproduzierbaren Ergebnissen. Zudem ist das Verfahren schnell und einfach auch im Dauerbetrieb einsetzbar.

Ein weiterer Vorteil des erfindungsgemäßen Verfahrens liegt darin, daß eine eventuelle Kreppung einer Papierbahn durch den Gleichlauf der Saugwalze mit der Bahn nicht beeinträchtigt oder verändert wird, ohne daß dazu weitere Vorkehrungen nötig wären. Und auch das Einsaugen von Luft ist nach dem erfindungsgemäßen Verfahren ausgeschlossen, ohne daß es dazu einer besonderen Überwachung oder Bedienung bedürfe. Vielmehr wird die in der Bahn zunächst eingeschlossene Luft gleichmäßig und sanft aus der Bahn befördert, unter gleichzeitigem Vordringen des Imprägniermittels.

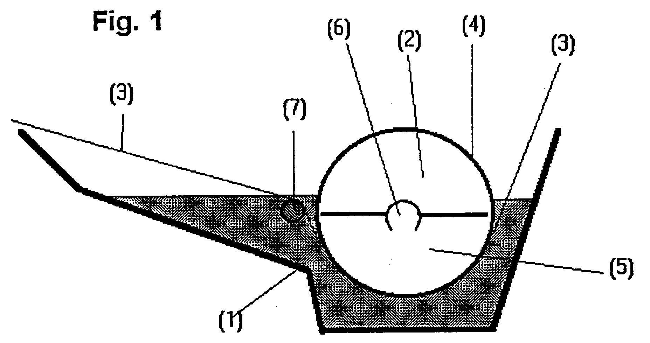

Für die Imprägnierung stand eine Anlage mit Abrollung, Imprägnierbereich, Schwebedüsenkanal und Aufrollung zur Verfügung. Die Imprägnierzone (Fig. 1) besteht aus einem abgeflachten Trog (1), in dessen tiefstem Bereich die Saugwalze (2) zumindest so tief eintaucht, daß die Saugzone vollständig sich in dem Imprägniermittel befindet; ein höherer Imprägnierflüssigkeitsspiegel bietet zusätzlich Sicherheit gegen das unerwünschte Eindringen von Luft. In dem vorgelagerten, abgeflachten Teil des Troges gelangt die schräg einlaufende Papierbahn (3) bereits in Kontakt mit dem Imprägniermittel und kann sich vollsaugen. Bei einem sehr kleinen Einlaufwinkel gelingt es sogar durch kurzzeitiges, einseitiges Befeuchten der Bahn, einen Großteil der eingeschlossenen Luft schon zu verdrängen - dafür ist aber eine zusätzliche Umlenkwalze (7) vor der eigentlichen Saugwalze notwendig, soll ein ausreichender Umschlingungswinkel sichergestellt werden. Der Saugwalze nachgeschaltet ist eine Abquetschstation, die gemäß Stand der Technik aus zwei Walzen besteht, um überschüssiges, oberflächlich anhaftendes Imprägniermittel abstreifen zu können. Die feuchte Bahn wird schließlich kontaktlos durch einen Trockenkanal geführt, getrocknet und zur Rolle aufgewickelt.

Kernstück der Anlage ist die Saugwalze: ein gleichmäßig perforierter Siebmantel (4), der an den Stirnseiten abgedichtet ist und im Gleichlauf mit der Trägerbahn rotiert. Durch entsprechende Einbauten innerhalb des Siebzylinders wird eine Saugzone (5) abgeteilt, die variabel gestaltet sein kann, im Versuch bei 180° lag. Durch ein entsprechend dimensioniertes, feststehendes Rohr (6), um welches der Siebzylinder rotiert, wird mittels einer geeigneten Pumpe die Saugzone "evakuiert", d.h. unter Unterdruck gesetzt. Die Dichtlippen zwischen der feststehenden Saugzone und dem rotierenden Siebmantel lassen sich so verstellen, daß ein geringer Volumenstrom schmierende Wirkung aufweist sowie evtl. erzeugte Partikel/Koagulate entfernt. Über einen Filter wird das abgesaugte Imprägniermittel in einen Zwischentank mit Ruhezone zum Absetzen von ggf. vorhandenem Schaum gepumpt; die diesem Vorratstank wird der Trog mit der Saugwalze versorgt und auf einem konstanten Füllstand gehalten.

Bei der Durchführung der Saugimprägnierung läßt man die Bahn eines Vlies, Gewebes oder insbesondere Papieres schräg in die Imprägnierwanne einlaufen: nach der Benetzung des Materials dringt das Imprägniermittel in den Träger ein; wie bei der normalen Tauchimprägnierung wird nur ein Teil der Luft verdrängt.

Speziell in dichten, komprimierten Trägern verbleiben erhebliche Mengen an Luft eingeschlossen, die bei späteren Anwendungen Schwachstellen darstellen können. Desweiteren wird die Qualität der Imprägnierung dadurch negativ beeinflußt, daß bei dichtem Trägermaterial bei Verwendung von Dispersionen ein sogenannter "Chromatographie"-Effekt auftritt: Wasser und kleine Teilchen dringen schneller und tiefer in das Gefüge ein, größere dagegen langsam bzw. werden im Extremfall an der Oberfläche zurückgehalten: das Resultat ist ein inhomogen imprägnierter Träger, der an der Oberfläche viel, z.T. sogar zu viel Imprägniermittel aufweist, dafür aber zur Trägermitte hin immer stärker verarmt - im Extremfall befindet sich mittig kein Imprägniermittel, weil nur Luft und Wasser, welches beim Trocknen wieder entfernt wird, dorthin gelangt sind. Bei Nutzung als Malerabdeckbänder, die bei Außenanwendung mit Feuchtigkeit in Kontakt kommen oder aber mit den umweltverträglichen Dispersionslacken überstrichen werden, machen sich derartige Imprägnierergebnisse sehr nachteilig bemerkbar: das verklebte Malerband läßt sich im feuchten Zustand nicht rückstandsfrei ablösen - beim Abziehen delaminiert der Träger mittig in diesem mangelhaft imprägnierten Bereich; langwierige Nacharbeiten oder aber längeres Warten bis zum Abtrocknen sind die Folge.

Bei der Saugimprägnierung wird jedoch das vorgefeuchtete Material anschließend über die Saugwalze, die im Gleichlauf synchron mit der Trägerbahn angetrieben wird, geführt: im Bereich der Saugzone tritt, verursacht durch den Unterdruck in diesem Walzensegment, ein Volumen senkrecht zur Trägeroberfläche auf, der eingeschlossene Luft verdrängt und den Querschnitt des Trägermaterials gleichmäßig mit nachgeliefertem Imprägniermittel aus dem Trog füllt. Als Ergebnis erhält man ein über den Querschnitt homogen imprägniertes Trägermaterial.

Die nachgeschalteten Arbeitsschritte Abquetschen, Trocknen und Aufwickeln entsprechen dem Stand der Technik.

### Beispiel 1

Als Träger wurde ein spezielles Clupak-Papier der Firma Thilmany eingesetzt (55 g/m², Dicke 90 - 100 µ), als Imprägniermittel eine modifizierte Acrylatdispersion (Acronal 500 D der BASF) in einer Konzentration von 38%.

An der Pilotanlage wurden bei Geschwindigkeiten von 1 - 40 m/min Unterdrucke von 0,6-0,8 bar realisiert. Das erhaltene Material hatte visuell gegenüber dem getauchten Material ein verändertes Aussehen: ist das getauchte Papier durch die Lufteinschlüsse undurchsichtig und weiß, ähnelt das gesaugte Material eher Pergamin: transparent-opak. Bei 20 - 50 % reduzierten Imprägniermitteleinträgen lagen die gemessenen Festigkeitswerte, speziell die Delaminationsfestigkeiten (Messung der Kraft, die benötigt wird, um den mittig gespaltenen Träger im Winkel von 180° weiter auseinanderzureißen), signifikant höher.

Werden aus den imprägnierten Clupak-Materialien Malerabdeckbänder gefertigt, die mit Dispersionsfarbe überstrichen werden, so spaltet nach 5 - 10 min der getauchte Träger nahezu vollständig, der gesaugte dagegen zeigt deutliche Qualitätsverbesserungen. Die homogene Verteilung des Trägers mit dem Imprägniermittel läßt sich visuell unter dem Lichtmikroskop beobachten, wenn man das carboxylierte Imprägniermittel Acronal 500 D mit einem geeigneten basischen Farbstoff leicht anfärbt.

### Beispiel 2

Ein flachgekrepptes, naturfarbenes Natron-Kraftpapier der Firma Holtzmann wurde mit einem SBR-Latex (Farbstoff 38%, mittlere Teilchengröße um 140 µm) der Firma Dow Chemicals imprägniert. In dem Geschwindigkeitsbereich von 1 - 40 m/min wurden auf der Pilotanlage Materialien hergestellt, die bei im Vergleich zu getauchten Trägermaterial ähnlichen Produkteigenschaften 10 - 40 % weniger Imprägniermittel hatten.

## Patentansprüche

1. Verfahren zum kontinuierlichen Imprägnieren von saugfähigen trockenen Bahnen (3), insbesondere solchen aus Papier, Vlies oder Gewebe, bei dem die Bahn (3) mit Imprägnierflüssigkeit beaufschlagt wird, an einer Saugzone (5) vorbei geführt wird und dabei die Imprägnierflüssigkeit durch die Bahn (3) gesaugt wird, dadurch gekennzeichnet, daß die Saugzone (5) in einer Saugwalze (2) angeordnet ist, deren Walzenumfangs-Geschwindigkeit mit der Bahn-Geschwindigkeit abgeglichen ist, wobei sich die Saugwalze (2) in einem Behälter (1) mit Imprägnierflüssigkeit dreht und die Bahn (3) um diese Saugwalze (2) umgelenkt wird, wobei sich im Umlenkbereich, in dem die Bahn (3) an der Saugwalze (2) anliegt, im Inneren der Saugwalze (2) eine feststehende Saugzone (5) befindet, und wobei der ImprägnierflüssigkeitsSpiegel in dem Behälter (1) über der Saugzone (5) steht.

2. Verfahren nach Anspruch 1, dadurch gekennzeichnet, daß die Saugwalze (2) so leichtlaufend ist, daß die an ihr umgelenkt laufende Bahn (3) die Saugwalze (2) mit der selben Geschwindigkeit ihres Walzenumfanges dreht, mit der sich die Bahn (3) bewegt, ohne daß es einer zusätzlichen Synchronisations-Maßnahme bedarf.

3. Verfahren nach Anspruch 1, dadurch gekennzeichnet, daß die Drehung der Saugwalze (2) mit der Bahngeschwindigkeit aktiv synchronisiert ist.

4. Verfahren nach Anspruch 1, dadurch gekennzeichnet, daß anschließend ein Überschuß an Imprägnierflüssigkeit in einer Quetsch-Station beseitigt wird und gegebenenfalls in den Behälter (1) mit der Imprägnierflüssigkeit zurückgeführt wird.

## Claims

1. Method for the continuous impregnation of absorbent dry webs (3), especially those made of paper, non-woven or fabric, in which the web (3) is loaded with impregnating liquid, guided past a suction zone (5) and, in so doing, the impregnating liquid is sucked through the web (3), characterized in that the suction zone (5) is arranged in a suction roll (2) whose roll peripheral speed is coordinated with the web speed, the suction roll (2) rotating in a container (1) of impregnating liquid and the web (3) being deflected around this suction roll (2), there being a stationary suction zone (5) inside the suction roll (2) in the deflection region in which the web (3) is against the suction roll (2), and the level of the impregnating liquid in the container (1) being above the suction zone (5).

2. Method according to Claim 1, characterized in that the suction roll (2) runs so easily that the running web (3) deflected around it rotates the suction roll (2) at the same speed of its roll periphery as that at which the web (3) moves, without requiring an additional synchronization measure.

3. Method according to Claim 1, characterized in that the rotation of the suction roll (2) is actively synchronized with the web speed.

4. Method according to Claim 1, characterized in that a surplus of impregnating liquid is subsequently removed in a squeezing station and optionally fed back into the container (1) with the impregnating liquid.

## Revendications

1. Procédé pour l'imprégnation continue de bandes sèches absorbantes (3), en particulier de bandes de papier, feutre ou tissu, dans lequel la bande (3) est exposée à un liquide d'imprégnation, est conduite le long d'une zone d'aspiration (5) et le liquide d'imprégnation est ainsi aspiré à travers la bande (3), caractérisé en ce que la zone d'aspiration (5) est disposée dans un rouleau aspirant (2), dont la vitesse périphérique est égale à la vitesse de la bande, dans lequel le rouleau aspirant (2) tourne dans un récipient (1) avec un liquide d'imprégnation et la bande (3) est déviée autour de ce rouleau aspirant (2), dans lequel une zone d'aspiration fixe (5) se trouve à l'intérieur du rouleau aspirant (2), dans la région de déviation dans laquelle la bande (3) est appliquée sur le rouleau aspirant (2), et dans lequel le niveau du liquide d'imprégnation dans la récipient (1) se trouve plus haut que la zone d'aspiration (5).

2. Procédé suivant la revendication 1, caractérisé en ce que le rouleau aspirant (2) tourne à ce point facilement que la bande (3) déviée sur celui-ci fait tourner le rouleau aspirant (2) à la même vitesse périphérique que celle à laquelle la bande (3) se meut, sans que cela ne nécessite de mesure de synchronisation supplémentaire.

3. Procédé suivant la revendication 1, caractérisé en ce que la rotation du rouleau aspirant (2) est activement synchronisée avec la vitesse de la bande.

4. Procédé suivant la revendication 1, caractérisé en ce qu'un excédent de liquide d'imprégnation est ensuite enlevé dans une station d'essorage et le cas échéant est renvoyé dans le récipient (1) avec le liquide d'imprégnation.
